# EUROPEAN PATENT SPECIFICATION

(11) **EP 3 943 777 B1**
(45) Date of publication and mention of the grant of the patent: **26.07.2023**
(21) Application number: 20773867.5
(22) Date of filing: 12.03.2020
(51) Int. Cl.: F16H 7/08

(54) **CHAIN TENSIONER**
KETTENSPANNER
TENDEUR DE CHAÎNE

(30) Priority: 20.03.2019 JP 2019052970
(43) Date of publication of application: 26.01.2022
(73) Proprietor: NTN Corporation, Osaka-shi, Osaka 550-0003 (JP)
(72) Inventor: ONIMARU, Kouichi, Iwata-shi, Shizuoka 438-8510 (JP); SATO, Seiji, Iwata-shi, Shizuoka 438-8510 (JP)
(74) Representative: Grünecker Patent- und Rechtsanwälte PartG mbB
(86) International application number: PCT/JP2020/010770
(87) International publication number: WO 2020/189487

(56) References cited:
- EP-A1- 2 514 996
- EP-A1- 2 767 682
- JP-A- H06 173 622
- JP-A- H06 173 622
- JP-A- H09 119 490
- JP-A- 2004 197 665
- JP-A- 2011 141 006
- JP-A- 2014 134 263
- JP-A- 2017 044 235
- US-A- 4 674 996
- US-A1- 2017 059 012

## Description

### TECHNICAL FIELD

The present invention relates to a chain tensioner used to maintain tension in a chair Such a tensioner is known from US2017059012A.

### BACKGROUND ART

Chain transmission systems used in engines of, e.g., automobiles include, for example: one that transmits the rotation of a crankshaft to a camshaft or camshafts; one that transmits the rotation of a crankshaft to engine accessories such as an oil pump; one that transmits the rotation of a crankshaft to a balancer shaft; and one that couples together the intake and exhaust cams of a twin-cam engine. Chain tensioners are used to maintain tension in the chains of such chain transmission systems within an appropriate range.

A typical chain tensioner generates a hydraulic damper force by supplying oil from the engine, thereby keeping constant the tension in the chain. However, since no oil is supplied when the engine is stopped, the chain tensioner may be unable to generate a predetermined hydraulic damper force after the engine is started until the pressure chamber in the chain tensioner is filled with oil. In such a case, the chain tensioner will be pushed in to a large degree, causing flapping of the chain and abnormal sounds. For this reason, many chain tensioners include what is known as a "no-retraction mechanism" that prevents the plunger from being pushed in beyond a certain amount (see, for example, below-identified Patent Document 1).

A chain tensioner is also known which is capable of reducing the amount of oil flowing out of the chain tensioner by circulating oil within the chain tensioner, and which is capable of generating, using the oil circulated and retained inside the chain tensioner, a hydraulic damper force immediately after the engine is started (see, e.g., Patent Document 1 and below-identified Patent Document 2).

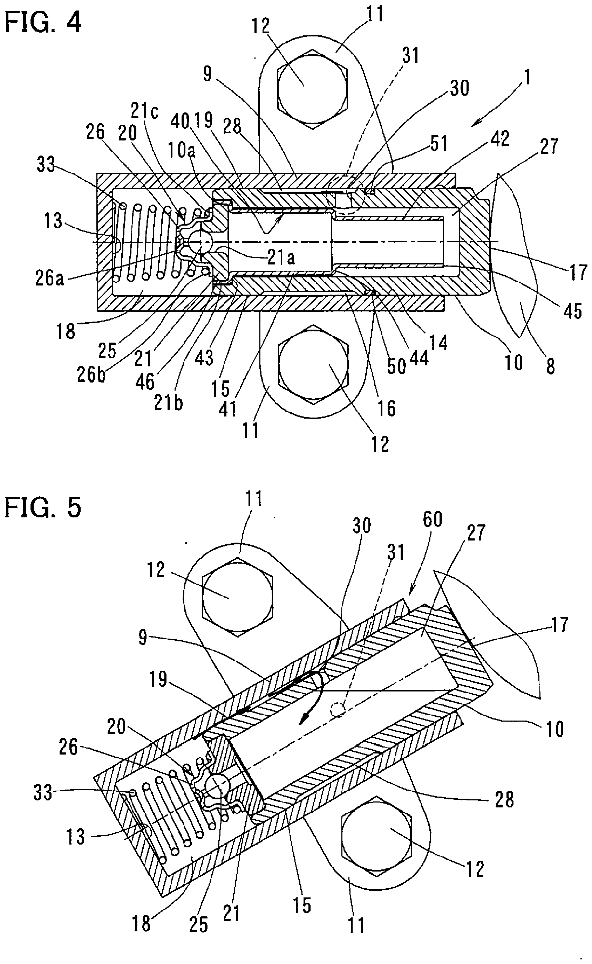

As such an example, the chain tensioner 60 shown in Fig. 5 includes a tubular cylinder 9 having one end thereof open and the other end closed; a tubular plunger 10 axially slidably supported by the inner periphery of the cylinder 9; a return spring 33 biasing the plunger 10 in the direction in which the plunger 10 protrudes beyond the one end of the cylinder 9; a reservoir chamber 27 defined within the plunger 10; a pressure chamber 18 defined within the cylinder 9 on the other end side of the plunger 10 such that the volume of the pressure chamber 18 changes as the plunge 10 axially moves; and a check valve 20 disposed at the end of the plunger 10 inserted in the cylinder 9 to allow only a flow of oil from the reservoir chamber 27 to the pressure chamber 18.

The cylinder 9 has an oil supply path 31 through which oil supplied by, e.g., an oil pump is introduced into the cylinder 9. The oil supply path 31 opens into an oil supply space 28 defined between the outer periphery of the plunger 10 and the inner periphery of the cylinder 9. A leakage gap 19 is defined between the outer periphery of the plunger 10 and the inner periphery of the cylinder 9. The leakage gap 19 is a minute gap extending from the pressure chamber 18 to the opening of the cylinder 9 at the one end thereof, via the oil supply space 28. The leakage gap 19 and the oil supply space 28 communicate with the reservoir chamber 27 via a communication path 30. The return spring 33 provides a thrust force to the plunger 10 to allow the plunger 10 to move quickly following flapping movement of the chain.

When the tension in the chain increases during operation of the engine, the tension in the chain moves the plunger 10 in the direction in which the plunger 10 is pushed into the cylinder 9 toward the other end of the cylinder 9 (this direction is hereinafter referred to as the "pushed-in direction"), thereby removing the tension in the chain. The movement of the plunger 10 in this direction increases the pressure in the pressure chamber 18, thus closing the check valve 20, so that oil flows from the pressure chamber 18 through the leakage gap 19 toward the oil supply space 28. When passing through the leakage gap 19, oil produces a damper force due to its viscous resistance, and the damper force prevents flapping of the chain. At this time, oil partially flows through the portion of the leakage gap 19 on the one end side of the oil supply space 28, to the outside of the chain tensioner 60, and then returns to the engine side. However, because the leakage gap 19 is a minute gap and thus provides a large flow resistance, most part of the oil in the oil supply space 28 returns to the reservoir chamber 27 via the communication path 30 (see the arrow in Fig. 5).

On the other hand, when the tension in the chain decreases during operation of the engine, the biasing force of the return spring 33 moves the plunger 10 in the direction in which the plunger 10 protrudes beyond the one end of the cylinder 9 (this direction is hereinafter referred to as the "protruding direction"), thereby removing any slack in the chain. The movement of the plunger 10 in this direction causes the check valve 20 to open, allowing a flow of oil from the reservoir chamber 27 into the pressure chamber 18, so that the plunger 10 moves quickly in the protruding direction.

### PRIOR ART DOCUMENTS

### PATENT DOCUMENTS

Patent Document 1: JP H03-010819B
Patent Document 2: JP 2015-183767A

### SUMMARY OF THE INVENTION

### OBJECT OF THE INVENTION

In the conventional chain tensioner 60 illustrated in Fig. 5, immediately after the engine is started and until oil is supplied from an oil pump via oil piping in the engine, oil retained in the tensioner is used to generate a hydraulic damper force. Thus, it is desired that the tensioner be capable of retaining as large an amount of oil therein. However, when the engine is stopped, oil in the oil piping drops, under its own weight, into an oil pan located under the engine. Also, the level of the oil in the tensioner falls to the height of the oil supply path 31, which is the connecting point to the engine-side oil piping. Thus, depending on the mounting angle of the tensioner relative to the engine, and/or the position of the oil supply path 31, immediately after the engine is started, the tensioner may not be capable of producing a suitable damper force due to no necessary amount of oil for that purpose remaining in the cylinder 9.

Also, in the conventional chain tensioner 60, immediately after the engine is started, air in the oil piping could flow, in the form of bubbles, into the pressure chamber 18 together with oil flowing through the oil supply path 31 into the cylinder 9. If oil containing air bubbles flows into the pressure chamber 18, the tensioner may be unable to produce a sufficient damper force.

An object of the present invention is to provide a chain tensioner that produces a suitable damper force immediately after the engine is started.

In order to achieve this object, the present invention provides a chain tensioner comprising the features of claim 1.

The connecting portion of the separating member may be fixed to the valve seat by crimping.

In any of these arrangements, the separating member may comprise a large-diameter portion located at a position closer to the other end than is the oil supply path, the large-diameter portion being in close contact with the inner periphery of the plunger; and a small-diameter portion located at a position closer to the one end than is the oil supply path, wherein a gap is defined between the small-diameter portion and the inner periphery of the plunger.

In any of these arrangements, the chain tensioner may further comprise a return spring biasing the plunger in a direction in which the plunger protrudes beyond the one end of the cylinder, wherein the return spring is a tapered coil spring of which the end close to the plunger is smaller in diameter.

In any of these arrangements, the chain tensioner may further comprise a seal ring disposed between the outer periphery of the plunger and the inner periphery of the cylinder, at a position closer to the one end than is the oil supply path.

### ADVANTAGES OF THE INVENTION

The chain tensioner according to the present invention is capable of producing a sufficient damper force immediately after the engine is started.

### BRIEF DESCRIPTION OF THE DRAWINGS

Fig. 1 shows the entirety of a chain transmission system including a chain tensioner embodying the present invention.
Fig. 2A is a right side view of the chain tensioner of Fig. 1.
Fig. 2B is a back view of Fig. 2A.
Fig. 3A is a vertical sectional view of the chain tensioner embodying the present invention.
Fig. 3B is a vertical sectional view of the chain tensioner embodying the present invention.
Fig. 4 is a vertical sectional view of a modification of the embodiment of Fig. 3A.
Fig. 5 is a vertical sectional view of a conventional chain tensioner.

### MODE FOR EMBODYING THE INVENTION

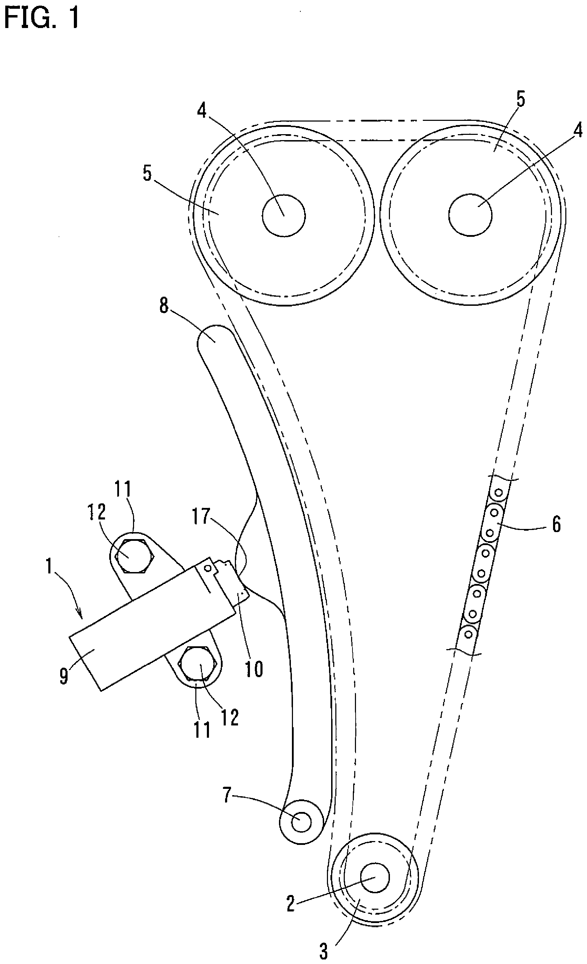

Fig. 1 illustrates a chain transmission system including a chain tensioner 1 embodying the present invention. The chain transmission system further includes a sprocket 3 fixed to the crankshaft 2 of an engine; sprockets 5 fixed, respectively, to two camshafts 4; and a chain 6 coupling together the sprocket 3 and the sprockets 5. The rotation of the crankshaft 2 is transmitted to the camshafts 4 by the chain 6, and rotates the camshafts 4, thereby opening and closing the valves of the combustion chambers.

The rotational direction of the crankshaft 2 while the engine is running is constant (clockwise direction in Fig. 1), and the side of the chain 6 moving toward the sprocket 3 (right side in Fig. 1) becomes a tight side, whereas the side of the chain 6 moving away from the sprocket 3 (left side in Fig. 1) becomes a slack side. A chain guide 8 supported for pivotable movement about a pivot shaft 7 is in contact with the slack side of the chain 6. The chain tensioner 1 presses the chain 6 via the chain guide 8.

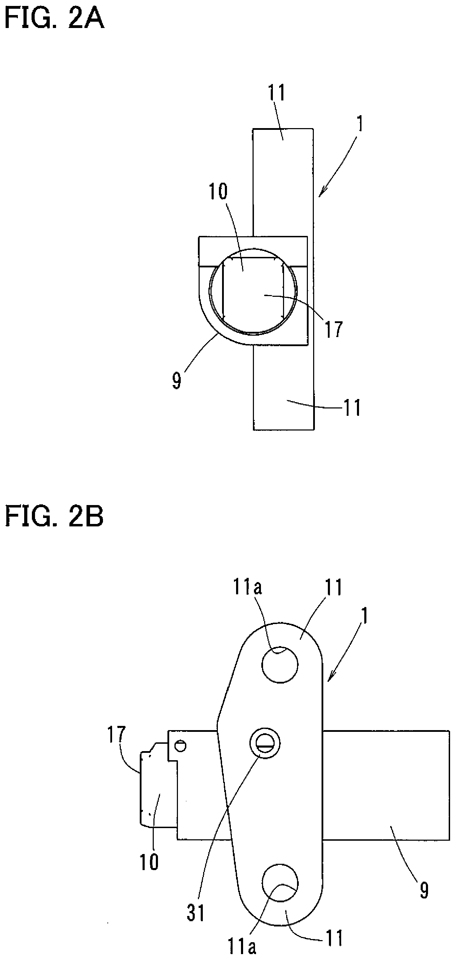

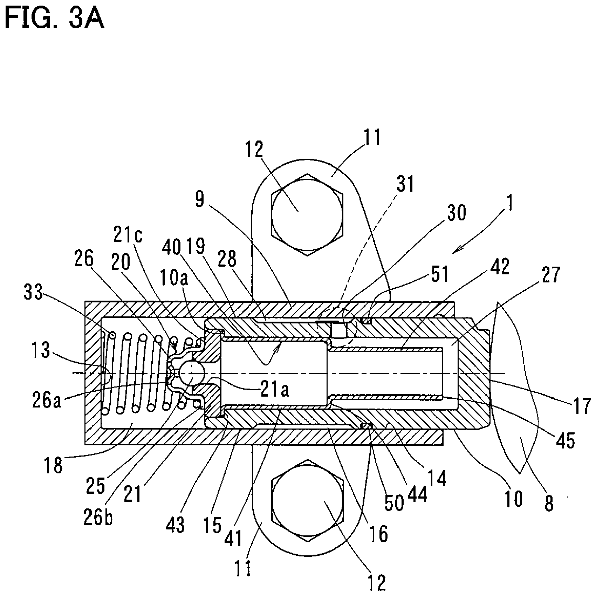

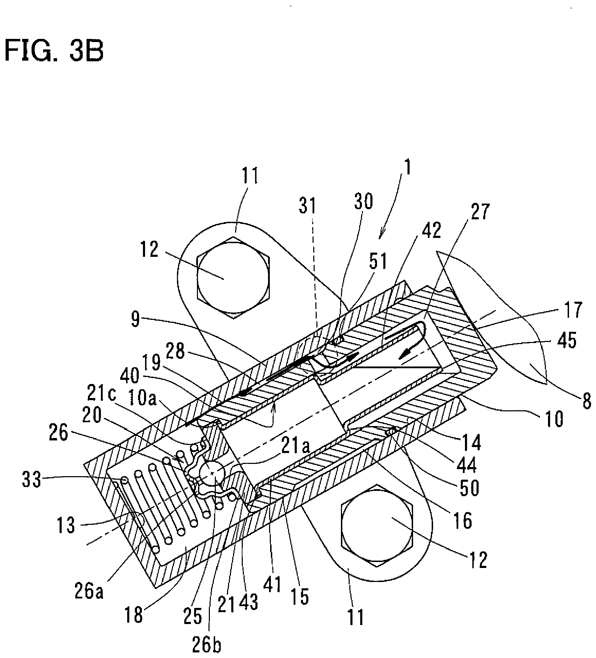

As illustrated in Figs. 2A, 2B, 3A and 3B, the chain tensioner 1 includes a tubular cylinder 9 having one end thereof open, and the other end closed; and a plunger 10 axially slidably supported by the inner periphery of the cylinder 9. The plunger 10 has a protruding end 17 protruding beyond the one end of the cylinder 9 and pressing the chain guide 8.

The cylinder 9 is integrally formed of a metal (such as an aluminum alloy). An attachment piece 11 having a plurality of holes 11a (see Figs. 2A and 2B) is integrally formed on the outer periphery of the cylinder 9. By inserting bolts 12 through the respective holes 11a of the attachment piece 11 and tightening the bolts 12, the cylinder 9 is fixed to a wall surface of the engine such as of the cylinder block. Depending on its specifications, the chain tensioner 1 may be attached to an engine wall surface such that the cylinder 9 is horizontally oriented, or such that the direction in which the plunger 10 protrudes out of the cylinder 9 is an obliquely downward direction. In the embodiment, however, as shown in Figs. 1 and 3B, the cylinder 9 is attached such that the plunger 10 protrudes obliquely upward.

The plunger 10 is a tubular member of which the other end, inserted in the cylinder 9, is open, and the one end, which is the protruding end 17 protruding out of the cylinder 9, is closed. The plunger 10 is made of an iron-based material (e.g., steel such as SCM (chrome molybdenum steel) or SCr (chrome steel)).

The cylinder 9 defines, at the other end portion of its interior, a pressure chamber 18 of which the volume changes as the plunge 10 axially moves, i.e., increases when the plunger 10 moves in the protruding direction, and decreases when the plunger 10 moves in the pushed-in direction.

A check valve 20 is disposed at the end of the plunger 10 that is inserted in the cylinder 9 so as to allow only the flow of oil from the interior of the plunger 10 toward the pressure chamber 18, and restrict the flow of oil from the pressure chamber 18 into the plunger 10. The check valve 20 includes a valve seat 21 disposed at the end of the plunger 10 inserted in the cylinder 9; a valve hole 21a in the valve seat 21; a spherical valve element 25 that opens and closes the valve hole 21a from the side of the pressure chamber 18 (the valve element 25 is hereinafter referred to as the "check ball 25"); and a retainer 26 that restricts the moving range of the check ball 25. The retainer 26 includes retaining portions 26a that prevents separation of the check ball 25 toward the pressure chamber 18, and an edge portion 26b by which the retaining portions 26a are supported on the valve seat 21. The retaining portions 26a, which extend radially and rise toward the pressure chamber 18 from the edge portion 26b, are fitted to a cylindrical protrusion around the valve hole 21a of the valve seat 21. The edge portion 26b abuts an end surface 21c of the valve seat 21.

The internal space of the plunger 10 defines a reservoir chamber 27 having a diameter larger than the diameter of the valve hole 21a of the check valve 20. The valve seat 21 of the check valve 20 is mounted to the other end of the reservoir chamber 27. The valve seat 21 has a columnar or disk shape, and the valve hole 21a extends through the valve seat 21 along its center axis from the one to the other end thereof. While the valve element 25 is separated from the valve hole 21a toward the other end, the pressure chamber 18 communicates with the reservoir chamber 27 via the valve hole 21a.

Between an outer periphery 15 of the plunger 10 and an inner periphery 14 of the cylinder 9, a leakage gap 19 is defined which allows leakage of oil from the pressure chamber 18 to outside the pressure chamber 18. The size of the leakage gap 19 is such that the difference in radius between the inner periphery 14 of the cylinder 9 and the outer periphery 15 of the plunger 10 is within the range of 0.005 to 0.100 mm.

Also defined between the outer periphery 15 of the plunger 10 and the inner periphery 14 of the cylinder 9 is an oil supply space 28 communicating with the leakage gap 19. The oil supply space 28 is an annular space defined between a recess 16 formed in the outer periphery of the plunger 10 to extend the entire circumference thereof, and the inner periphery 14 of the cylinder 9. The recess 16 defining the oil supply space 28 is disposed such that, even when the plunger 10 moves to the extreme end either in the protruding or pushed-in direction, the recess 16 communicates with the oil supply path 31, with the leakage gap 19 present on one and the other end sides of the recess 16.

A return spring 33 is mounted in the pressure chamber 18. The return spring 33 has the other end thereof supported by a bottom 13 of the cylinder 9, and presses, at the one end thereof, the plunger 10 via the edge portion 26b of the retainer 26 and the valve seat 21, thereby biasing, with the pressing force, the plunger 10 in the protruding direction. In the embodiment, the return spring 33 is a tapered coil spring having a smaller diameter at its end closer to the plunger 10.

The plunger 10 has a communication path 30 through which the oil supply space 28 and the reservoir chamber 27 communicate with each other. The communication path 30 also communicates with the leakage gap 19 via the oil supply space 28.

The communication path 30 is disposed such that, with the attachment piece 11 of the cylinder 9 fixed to the engine wall surface, the communication path 30 is located in the upper half of the circumference of the plunger 10. Specifically, the communication path 30 is located in the radially upper portion of the plunger 10 and within the area of the plunge 10 corresponding to half of the outer circumferential dimension of the plunger 10, and particularly in the embodiment, the communication path 30 is located at the top of the outer periphery of the plunger 10. Thus, any air present in the reservoir chamber 27 can be smoothly discharged through the communication path 30.

The cylinder 9 has an oil supply path 31 through which oil is introduced into the cylinder 9 from outside thereof. The oil supply path 31 is a through hole radially extending through the cylinder 9. As shown in Fig. 2B, the inlet of the oil supply path 31 opens to the engine wall surface E. When the chain tensioner 1 is mounted to the engine wall surface E, this opening is connected to oil piping P extending from an engine oil pump. The outlet of the oil supply path 31 opens to a cylindrical surface on the inner periphery of the cylinder 9 at a position facing the oil supply space 28. Through the oil supply path 31, oil supplied from the engine oil pump is introduced into the cylinder 9 from outside thereof.

In the reservoir chamber 27, a tubular separating member 40 rises from the check valve 20 toward the one end.

The separating member 40 has one axial end of the tubular shape thereof located closer to the one end than are the outlet of the oil supply path 31 and the opening of the communication path 30 that opens into the reservoir chamber 27. The separating member 40 has, at the one axial end, an opening 45 that opens into the reservoir chamber 27. The separating member 40 includes, at the other axial end thereof, a connecting portion 43 fixed in position by being sandwiched between the plunger 10 and the valve seat 21.

The separating member 40 may include a large-diameter portion 41 located, with respect to the axial direction of the cylinder 9, closer to the other end than is the oil supply path 31, while being in close contact with the inner periphery of the plunger 10. Because the inner periphery of the plunger 10 is a cylindrical surface, the outer periphery of the large-diameter portion 41 is also a cylindrical surface.

The separating member 40 includes, at a location closer to the one end, with respect to the axial direction of the cylinder 9, than is the oil supply path 31, a small-diameter portion 42 smaller in diameter than the large-diameter portion 41, and defining a gap between the small-diameter portion 42 and the inner periphery of the plunger 10. The inner periphery of the plunger 10 and the outer periphery of the small-diameter portion 42 are concentric cylindrical surfaces, so that the gap between the cylindrical surface of the plunger 10 and the cylindrical surface of the small-diameter portion 42 is uniform around the entire circumference thereof. The large-diameter portion 41 and the small-diameter portion 42 are connected together via a step 44. As an alternative arrangement, the separating member 40 may be a tubular member composed only of a continuous small-diameter portion 42 of a constant diameter, and including no large-diameter portion 41. Further alternatively, the separating member 40 may include a tapered portion at which the diameter changes, and including no large-diameter portion 41. Also, in an arrangement including the large-diameter portion 41 and the small-diameter portion 42, the large-diameter portion 41 and the small-diameter portion 42 may be connected together via a tapered portion.

In the embodiment, the small-diameter portion 42 includes, in addition to the section located closer, with respect to the axial direction of the cylinder 9, to the one end than is the oil supply path 31, a section located at or adjacent to the outlet of the oil supply path 31 and the opening of the communication path 30 opening into the reservoir chamber 27. Thus, the step 44 connecting the large-diameter portion 41 to the small-diameter portion 42 is located closer to the other end than is the area adjacent to the oil supply path 31, and than is the opening of the communication path 30 opening into the reservoir chamber 27.

A seal ring 50 is disposed between the outer periphery 15 of the plunger 10 and the inner periphery 14 of the cylinder 9, at a position closer to the one end than is the oil supply path 31. The seal ring 50 is received in a seal groove 51 formed in the outer periphery 15 of the plunger 10, and reduces the amount of oil leaking out of the cylinder 9 through the leakage gap 19. The seal ring 50 may be, for example, an annular member made of resin, rubber or metal.

The operation of the chain tensioner 1 is now described. During normal operation, when the tension in the chain 6 exceeds the thrust force of the return spring 33, which is biasing the plunger 10, the plunger 10 moves in the pushed-in direction under the tension in the chain, thereby absorbing the tension in the chain 6, and together with the plunger 10, the valve seat 21 moves toward the pressure chamber 18. Because the volume of the pressure chamber 18 decreases with the movements of the plunger 10 and the valve seat 21 in this direction, the pressure in the pressure chamber 18 exceeds the pressure in the reservoir chamber 27, and the check valve 20 closes, sealing the pressure chamber 18. While the check valve 20 is closed, the oil that has flowed out of the pressure chamber 18 through the leakage gap 19 mostly returns to the reservoir chamber 27 after flowing through the oil supply space 28 and the communication path 30. Due to the viscous resistance of the oil flowing through the leakage gap 19, a damper force is generated, which prevents flapping of the chain 6.

When the tension in the chain 6 decreases during operation of the engine, the plunger 10 moves in the protruding direction under the biasing force of the return spring 33, removing slack in the chain 6. With the movement of the plunger 10 in the protruding direction, the volume of the pressure chamber 18 increases, and the pressure in the pressure chamber 18 drops below the pressure in the reservoir chamber 27. This opens the check valve 20, and allows oil to flow from the reservoir chamber 27 through the valve hole 21a of the check valve 20 into the pressure chamber 18, thus allowing rapid movement of the plunger 10. Simultaneously, under the oil pump pressure, oil is introduced from the engine-side oil piping into the reservoir chamber 27 via the oil supply path 31, the oil supply space 28, and the communication path 30. Thus, the pressure in the reservoir chamber 27 is less likely to drop, which in turn improves the ability of the chain tensioner to quickly re-tension the slack chain.

Because this chain tensioner 1 defines within the plunger 10 a reservoir chamber 27 having a diameter larger than the diameter of the valve hole 21a of the check valve 20, it is capable of retaining a large amount of oil in the plunger 10. Thus, even while, immediately after the engine is started, no oil is supplied to the chain tensioner 1 from the engine, the chain tensioner is capable of generating a damper force using the oil retained in the reservoir chamber 27.

During operation of the engine, because oil is supplied from the engine-side oil piping through the oil supply path 31 into the cylinder 9, and then the oil flows through the communication path 30 into the reservoir chamber 27 within the plunger 10, enough oil normally remains in the cylinder 9. However, in the conventional chain tensioner 60, when the engine stops, and the supply pressure in the engine-side oil piping disappears, oil in the oil piping drops under its own weight into an oil pan located under the engine, which causes the level of the oil in the chain tensioner 60 to fall to the height of the oil supply path 31, which is the connecting point to the engine-side piping. This could, depending on the operating conditions, result in shortage of oil in the cylinder 9 immediately after the engine is started.

In contrast, according to the present invention, because the separating member 40 is disposed in the reservoir chamber 27 within the plunger 10, oil is retained within the separating member 40 while the engine is stopped, and the separating member 40 is designed such that oil retained therein is less likely to flow into the communication path 30, the oil supply space 28, and the oil supply path 31. This is because, as shown in Fig. 3B, with the chain tensioner 1 mounted to the engine wall surface, the opening 45 of the separating member 40 is located closer to the one end, i.e., at a higher level, than the communication path 30 and the oil supply path 31. In this arrangement, it is possible to determine, with greater freedom, the position of the oil supply path 31, and the mounting angle of the chain tensioner 1 relative to the engine wall surface, while ensuring the ability to retain enough oil in the cylinder 9. Also, since the separating member 40 is disposed within the plunger 10, it does not add to the size of the chain tensioner 1.

If, immediately after the engine is started, oil containing air bubbles (air) flows into the plunger 10, the oil containing the air bubbles moves toward the one end of the plunger 10. Because the protruding end 17 of the plunger 10 is obliquely upwardly oriented, the air bubbles remain in the upper portion of the plunger 10, i.e., its portion including the protruding end 17, with only the oil flowing through the interior of the separating member 40 toward the check valve 20. This reduces entry of air bubbles into the pressure chamber 18, thus ensuring a sufficient damper force.

Also, even if the chain tensioner 1 is mounted horizontally to the engine wall surface as shown in Fig. 3A, because the oil flow distance between the communication path 30 and the check valve 20 is prolonged by the separating member 40, it is possible, to some extent, to prevent oil from flowing out of the cylinder 9 while the engine is stopped, and to reduce entry of air bubbles into the pressure chamber 18 immediately after the engine is started.

In the embodiment, the separating member 40 is fixed in position by being sandwiched between the plunger 10 and the valve seal 21. Specifically, as shown in Figs. 3A and 3B, the separating member 40 has a radially outwardly extending flange-shaped connecting portion 43 disposed at the other end of the separating member 40 so as to be sandwiched between an end surface 10a of a step at the other end portion of the plunger 10, and the back surface of the valve seat 21. With this fixing arrangement by sandwiching, the separating member 40 is axially positioned, thus preventing the opening 45 of the separating member 40 at the one end thereof from coming into contact with the inner end surface of the plunger 10 at the one end thereof. This ensures an oil flow path without the need to provide a groove for passage of oil in the edge of the separating member 40 at the one end thereof, or to provide a hole extending through the separating member 40 from its inner to outer peripheral surface, and thus provides a simple structure of the separating member 40. Further, the biasing force of the return spring 33 provides enough strength to fix the separating member 40 in position by sandwiching.

Further, because, at a position closer, with respect to the axial direction of the cylinder 9, to the other end than is the oil supply path 31, the separating member 40 includes a large-diameter portion 41 that is in close contact with the inner periphery of the plunger 10, the separating member 40 and the plunger 10 are radially correctly positioned relative to each other.

Fig. 4 shows a modification of the above embodiment. In this modified example, at the other end portion, the separating member 40 includes, in addition to the radially outwardly extending flange-shaped connecting portion 43, a cylindrical connecting portion 46 extending in the axial direction toward the other end from the radially outer edge of the flange-shaped connecting portion 43. The flange-shaped connecting portion 43 is fixed in position by being sandwiched between the end surface 10a of the step at the other end portion of the plunger 10, and the back surface of the valve seat 21, whereas the cylindrical connecting portion 46 is fixed in position by being sandwiched between an outer peripheral surface 21b of the valve seat 21 and the inner peripheral surface of the plunger 10. Thus, the separating member 40 of this example is more firmly fixed in position between the valve seat 21 and the plunger 10.

In this example, the cylindrical connecting portion 46 of the separating member 40, or both of the flange-shaped connecting portion 43 and the cylindrical connecting portion 46 of the separating member 40 may be fixed to the valve seat 21 by crimping. In particular, by plastically deforming the other end of the tubular metal member constituting the separating member 40 along, e.g., the outer peripheral surface 21b or the back surface of the valve seat 21, the separating member 40 and the valve seat 21 can be firmly fixed together.

By firmly fixing together the separating member 40 and the valve seat 21, the check vale 20 and the separating member 40 can be provided as an integral assembly, and this makes control of parts easier. Moreover, such an assembly can be easily mounted into the cylinder 9 of the chain tensioner 1.

By combining the check valve 20 and the separating member 40 into an assembly, it is possible to prevent the valve seat 21 from being mounted to the plunger 10 the opposite (wrong) way. In particular, if an attempt is made to mount the valve seat 21 in the front-side-back position to the plunger 10, the separating member 40 is not received in the plunger 10, and instead protrudes toward the bottom 13 of the cylinder 9. Thus, once the separating member 40 abuts the bottom 13, the plunger 10 cannot be pushed in toward the other end any further, so that the valve seat 21 cannot be mounted in the wrong way.

Means for firmly fixing together the separating member 40 and the valve seat 21 includes, besides crimping as described above, press-fitting the other end of the tubular separating member 40 onto the outer peripheral surface 21b of the valve seat 21.

In the embodiment, the return spring 33 is a tapered coil spring of which the one end thereof, which faces the end surface 10a, is smaller in diameter than the other end, which faces the bottom 13. Thus, the direction of the force with which the small-diameter one end presses the valve seat 21 is a direction approaching the center axis toward the valve seat 21, so that the valve seat 21 and the plunger 10 are more firmly fixed together. Also, the edge portion 26b of the retainer 26 is positioned around the valve hole 21a of the valve seat 21, and thus located relatively radially close to the center axis. Thus, the small-diameter one end of the return spring 33 is capable of easily pressing the edge portion 26b of the retainer 26, so that the retainer 26 can be easily held by the valve seat 21. Also, because the small-diameter end of the return spring 33 is fitted on the outer peripheries of the radial retaining portions 26a which rise from the edge portion 26b toward the pressure chamber 18, the small-diameter end of the return spring 33 is fixed to the retainer 26 and the valve seat 21, which stabilizes the expansion and contraction of the return spring 33. The return spring 33 may be a coil spring having a constant diameter along the entire length thereof.

In the embodiment, because a seal ring 50 is disposed between the outer periphery 15 of the plunger 10 and the inner periphery 14 of the cylinder 9 at a position closer to the one end than is the oil supply path 31, it is possible to prevent oil from flowing out of the cylinder 9 through the leakage gap 19.

### DESCRIPTION OF THE REFERENCE SYMBOLS

1. Chain tensioner
9. Cylinder
10. Plunger
14. Inner periphery
15. Outer periphery
18. Pressure chamber
19. Leakage gap
20. Check valve
21. Valve seat
21a. Valve hole
25. Valve element (check ball)
27. Reservoir chamber
30. Communication path
31. Oil supply path
40. Separating member
41. Large-diameter portion
42. Small-diameter portion
43, 46. Connecting portion
45. Opening
50. Seal ring

## Claims

1. A chain tensioner comprising:
a tubular cylinder (9) having one end thereof open, and the other end thereof closed;
a tubular plunger (10) axially slidably supported by an inner periphery of the cylinder (9), the plunger (10) having an open end located inside the cylinder (9), and a closed end protruding out of the cylinder (9);
a return spring (33) biasing the plunger (10) in a direction in which the plunger (10) protrudes beyond the one end of the cylinder (9);
a pressure chamber (18) defined in the cylinder (9) such that a volume of the pressure chamber (18) changes with axial movement of the plunger (10);
a reservoir chamber (27) defined within the plunger (10);
a check valve (20) that allows only a flow of oil from the reservoir chamber (27) toward the pressure chamber (18);
a leakage gap (19) between an outer periphery (15) of the plunger (10) and an inner periphery (14) of the cylinder (9);
a communication path (30) that allows communication between the leakage gap (19) and an interior of the plunger (10);
an oil supply path (31) connecting inside of the cylinder (9) to outside of the cylinder (9); and
a tubular separating member (40) rising from the check valve (20) toward the one end, the separating member (40) having an opening (45) that opens into the reservoir chamber (27), at a location closer to the one end than is the oil supply path (31)
wherein the check valve (20) comprises:
a valve seat (21) formed with a valve hole (21a) connecting the reservoir chamber (27) with the pressure chamber (18); and
a valve element (25) configured to open and close the valve hole (21a),
**characterized in that**
the separating member (40) includes a connecting portion (43, 46) at the other end of the separating member (40), the connecting portion (43, 46) being fixed in position by being sandwiched between the plunger (10) and the valve seat (21), so that the opening (45) of the separating member (40) at the one end thereof does not come into contact with an inner end surface of the plunger (10) at the one end thereof.

2. The chain tensioner according to claim 1, wherein the connecting portion (43, 46) of the separating member (40) is fixed to the valve seat (21) by crimping.

3. The chain tensioner according to claim 1 or 2, wherein the separating member (40) comprises:
a large-diameter portion (41) located at a position closer to the other end than is the oil supply path (31), the large-diameter portion (41) being in close contact with an inner periphery of the plunger (10); and
a small-diameter portion (42) located at a position closer to the one end than is the oil supply path (31), wherein a gap is defined between the small-diameter portion (42) and the inner periphery of the plunger (10).

4. The chain tensioner according to any of claims 1 to 3, further comprising a return spring (33) biasing the plunger (10) in a direction in which the plunger (10) protrudes beyond the one end of the cylinder (9), wherein the return spring (33) is a tapered coil spring of which an end close to the plunger (10) is smaller in diameter.

5. The chain tensioner according to any of claims 1 to 4, further comprising a seal ring (50) disposed between the outer periphery (15) of the plunger (10) and the inner periphery (14) of the cylinder (9), at a position closer to the one end than is the oil supply path (31).

## Patentansprüche

1. Kettenspanner, umfassend:
einen rohrförmigen Zylinder (9), der ein Ende davon offen aufweist und das andere Ende davon geschlossen;
einen rohrförmigen Kolben (10), der von einem Innenumfang des Zylinders (9) axial verschiebbar gestützt wird, wobei der Kolben (10) ein innerhalb des Zylinders (9) angeordnetes offenes Ende aufweist und ein geschlossenes Ende, das aus dem Zylinder (9) heraussteht;
eine Rückstellfeder (33), die den Kolben (10) in einer Richtung vorspannt, in welcher der Kolben (10) über das eine Ende des Zylinders (9) vorsteht;
eine Druckkammer (18), die in dem Zylinder (9) definiert ist, so dass sich ein Volumen der Druckkammer (18) mit axialer Bewegung des Kolbens (10) ändert;
eine Reservoirkammer (27), die innerhalb des Kolbens (10) definiert ist;
ein Rückschlagventil (20), das nur eine Ölströmung aus der Reservoirkammer (27) in Richtung der Druckkammer (18) zulässt;
einen Leckagespalt (19) zwischen einem Außenumfang (15) des Kolbens (10) und einem Innenumfang (14) des Zylinders (9);
einen Verbindungsweg (30), der eine Verbindung zwischen dem Leckagespalt (19) und einem Inneren des Kolbens (10) ermöglicht;
einen Ölzuführungsweg (31), der eine Innenseite des Zylinders (9) mit einer Außenseite des Zylinders (9) verbindet; und
ein rohrförmiges Trennelement (40), das sich von dem Rückschlagventil (20) in Richtung des einen Endes erhebt, wobei das Trennelement (40) eine Öffnung (45), die sich in die Reservoirkammer (27) öffnet, an einer Stelle aufweist, die sich näher an dem einen Ende als der Ölzuführungsweg (31) befindet,
wobei das Rückschlagventil (20) umfasst:
einen Ventilsitz (21), der mit einer Ventilbohrung (21a) ausgebildet ist, die die Reservoirkammer (27) mit der Druckkammer (18) verbindet; und
ein Ventilelement (25), das konfiguriert ist, die Ventilbohrung (21a) zu öffnen und zu schließen,
**dadurch gekennzeichnet, dass**
das Trennelement (40) einen Verbindungabschnitt (43, 46) an dem anderen Ende des Trennelements (40) umfasst, wobei der Verbindungabschnitt (43, 46) hinsichtlich der Position feststeht, indem er zwischen dem Kolben (10) und dem Ventilsitz (21) eingezwängt ist, so dass die Öffnung (45) des Trennelements (40) an dem anderen Ende davon nicht in Kontakt mit einer inneren Endfläche des Kolbens (10) an dem einen Ende davon gerät.

2. Der Kettenspanner nach Anspruch 1, wobei der Verbindungabschnitt (43, 46) des Trennelements (40) durch Crimpen an dem Ventilsitz (21) befestigt ist.

3. Der Kettenspanner nach Anspruch 1 oder 2, wobei das Trennelement (40) umfasst:
einen Abschnitt (41) mit großem Durchmesser, der sich an einer Position befindet, die näher an dem anderen Ende ist als der Ölzuführungsweg (31), wobei sich der Abschnitt (41) mit großem Durchmesser in engem Kontakt mit einem Innenumfang des Kolbens (10) befindet; und
einen Abschnitt (42) mit kleinem Durchmesser, der an einer Position angeordnet ist, die sich näher an dem einen Ende befindet als der Ölzuführungsweg (31), wobei ein Spalt zwischen dem Abschnitt (42) mit kleinem Durchmesser und dem Innenumfang des Kolbens (10) definiert ist.

4. Der Kettenspanner nach einem der Ansprüche 1 bis 3, ferner umfassend eine Rückstellfeder (33), die den Kolben (10) in einer Richtung vorspannt, in der der Kolben (10) über das eine Ende des Zylinders (9) vorsteht, wobei die Rückstellfeder (33) eine konische Spiralfeder ist, deren Ende, das sich nahe an dem Kolben (10) befindet, einen kleineren Durchmesser aufweist.

5. Der Kettenspanner nach einem der Ansprüche 1 bis 4, ferner umfassend einen Dichtungsring (50), der zwischen dem Außenumfang (15) des Kolbens (10) und dem Innenumfang (14) des Zylinders (9) an einer Position angeordnet ist, die sich näher an dem einen Ende befindet als der Ölzuführungsweg (31).

## Revendications

1. Tendeur de chaîne comprenant ;
un cylindre tubulaire (9) dont une extrémité est ouverte et l'autre fermée ;
un plongeur tubulaire (10) supporté axialement de manière coulissante par une périphérie intérieure du cylindre (9), le plongeur (10) ayant une extrémité ouverte située à l'intérieur du cylindre (9), et une extrémité fermée faisant saillie hors du cylindre (9) ;
un ressort de rappel (33) sollicitant le plongeur (10) dans une direction dans laquelle le plongeur (10) dépasse l'une des extrémités du cylindre (9) ;
une chambre de pression (18) définie dans le cylindre (9) de telle sorte que le volume de la chambre de pression (18) change avec le mouvement axial du plongeur (10) ;
une chambre de réservoir (27) définie à l'intérieur du plongeur (10) ;
un clapet anti-retour (20) qui ne permet qu'un écoulement d'huile de la chambre de réservoir (27) vers la chambre de pression (18) ;
un espace de fuite (19) entre une périphérie extérieure (15) du plongeur (10) et une périphérie intérieure (14) du cylindre (9) ;
une voie de communication (30) qui permet la communication entre l'espace de fuite (19) et l'intérieur du plongeur (10) ;
un chemin d'alimentation en huile (31) reliant l'intérieur du cylindre (9) à l'extérieur du cylindre (9) ; et
un élément de séparation tubulaire (40) s'élevant du clapet anti-retour (20) vers l'une de ses extrémités, l'élément de séparation (40) ayant une ouverture (45) qui débouche dans la chambre du réservoir (27), à un endroit plus proche de l'une de ses extrémités que ne l'est le chemin d'alimentation en huile (31),
dans lequel le clapet anti-retour (20) comprend
un siège de soupape (21) formé avec un trou de soupape (21a) reliant la chambre de réservoir (27) à la chambre de pression (18) ; et
un élément de soupape (25) configuré pour ouvrir et fermer le trou de soupape (21a),
**caractérisé par le fait que**
l'élément de séparation (40) comprend une partie de connexion (43, 46) à l'autre extrémité de l'élément de séparation (40), la partie de connexion (43, 46) étant fixée en position en étant prise en sandwich entre le plongeur (10) et le siège de soupape (21), de sorte que l'ouverture (45) de l'élément de séparation (40) à l'une de ses extrémités n'entre pas en contact avec une surface d'extrémité intérieure du plongeur (10) à l'une de ses extrémités.

2. Tendeur de chaîne selon la revendication 1, dans lequel la partie de connexion (43, 46) de l'élément de séparation (40) est fixée au siège de soupape (21) par sertissage.

3. Tendeur de chaîne selon les revendications 1 ou 2, dans lequel l'élément de séparation (40) comprend :
une partie de grand diamètre (41) située à une position plus proche de l'autre extrémité que ne l'est le chemin d'alimentation en huile (31), la partie de grand diamètre (41) étant en contact étroit avec une périphérie intérieure du plongeur (10) ; et
une partie de petit diamètre (42) située à une position plus proche de l'une des extrémités que ne l'est le chemin d'alimentation en huile (31), un espace étant défini entre la partie de petit diamètre (42) et la périphérie intérieure du plongeur (10).

4. Tendeur de chaîne selon l'une des revendications 1 à 3, comprenant en outre un ressort de rappel (33) sollicitant le plongeur (10) dans une direction dans laquelle le plongeur (10) dépasse l'une des extrémités du cylindre (9), dans lequel le ressort de rappel (33) est un ressort hélicoïdal conique dont une extrémité proche du plongeur (10) est de plus petit diamètre.

5. Tendeur de chaîne selon l'une des revendications 1 à 4, comprenant en outre une bague d'étanchéité (50) disposée entre la périphérie extérieure (15) du plongeur (10) et la périphérie intérieure (14) du cylindre (9), à une position plus proche de l'une des extrémités que ne l'est le chemin d'alimentation en huile (31).
